# EUROPÄISCHE PATENTSCHRIFT

(11) **EP 1 838 990 B1**
(45) Veröffentlichungstag und Bekanntmachung des Hinweises auf die Patenterteilung: **30.03.2011**
(21) Anmeldenummer: 06706185.3
(22) Anmeldetag: 10.01.2006
(51) Int. Cl.: F17C 5/02, F17C 9/00, F17C 7/02

(54) **KOHLENDIOXID-VERSORGUNG FÜR SPRITZGUSSANLAGEN**
CARBON DIOXIDE SUPPLY FOR INJECTION MOLDING MACHINES
ALIMENTATION EN DIOXYDE DE CARBONE D'INSTALLATIONS DE MOULAGE PAR INJECTION

(30) Priorität: 21.01.2005 DE 102005002976
(43) Veröffentlichungstag der Anmeldung: 03.10.2007
(73) Patentinhaber: Linde AG, 80331 München (DE)
(72) Erfinder: PRALLER, Andreas, 82110 Germering (DE)
(86) Internationale Anmeldenummer: PCT/EP2006/000143
(87) Internationale Veröffentlichungsnummer: WO 2006/077027

(56) Entgegenhaltungen:
- GB-A- 2 416 390
- US-A- 4 751 822

## Beschreibung

Die Erfindung betrifft ein Verfahren zur Versorgung eines Verbrauchers mit flüssigem Kohlendioxid mit einer Solltemperatur von mehr als 0 °C und einem Solldruck von mehr als 30 bar, wobei das Kohlendioxid einem Tank entnommen wird, in dem das flüssige Kohlendioxid bei einer Temperatur unterhalb der Solltemperatur und einem Druck unterhalb des Solldrucks gespeichert ist und wobei der Druck des Kohlendioxids erhöht wird. Zur Kühlung von Spritzgusswerkzeugen oder Spritzgussformen wird unter anderem auch Kohlendioxid eingesetzt. Hierzu werden Kapillarröhrchen oder Expansionsdüsen mit flüssigem, blasenfreiem Kohlendioxid versorgt, welches in den Kapillarröhrchen expandiert und dabei dem Spritzgusswerkzeug Wärme entzieht.

Für eine gleichmäßige und reproduzierbare Kühlung ist wesentlich, dass das Kohlendioxid mit einem bestimmten Solldruck zwischen 40 und 70 bar und einer festen Solltemperatur im Bereich der Umgebungstemperatur dem Werkzeug zugeführt wird. Die Einhaltung des "warmen" Temperaturbereichs ist erforderlich, um die Kondensation von Luftfeuchtigkeit auf den Kohlendioxid führenden Leitungen und auf den Spritzwerkzeugen zu vermeiden. Feuchtigkeit oder Tropfwasser, das in die Spritzwerkzeuge tropft, beeinflusst nämlich die Qualität der produzierten Formteile und birgt die Gefahr, dass die Werkzeuge korrodieren.

Kohlendioxid mit den genannten Druck- und Temperatureigenschaften wird üblicherweise aus einem sogenannten Mitteldrucktank entnommen, in dem das Kohlendioxid bereits im gewünschten Druckbereich von etwa 50 bis 70 bar und der korrespondierenden Siedetemperatur von 15 bis 25°C gelagert ist. Das flüssige Kohlendioxid wird von dem Mitteldrucktank über Rohrleitungen zu einem oder mehreren Spritzgusswerkzeugen geleitet.

Die Kühlung der Werkzeuge wird normalerweise über das zeitliche Takten eines Magnetventils in der Leitung zum Spritzgusswerkzeug gesteuert und eingestellt. Für eine reproduzierbare Kühlung ist es erforderlich, dass der Druck und die Temperatur des Kohlendioxids vor dem Magnetventil immer gleich groß sind. Wenn, beispielsweise im Sommer, die Temperatur in der Produktionshalle höher als die zum Tankdruck korrespondierende Siedetemperatur ist, kann das Kohlendioxid teilweise bereits in der den Mitteldrucktank mit dem Werkzeug verbindenden Rohrleitung verdampfen, woraus eine schlechtere und ungleichmäßigere Kühlung resultiert.

Aufgabe vorliegender Erfindung ist es daher, ein Verfahren und eine entsprechende Vorrichtung zur Versorgung eines Verbrauchers mit flüssigem Kohlendioxid zur Verfügung zu stellen, wobei die oben genannten Probleme vermieden werden.

Diese Aufgabe wird durch ein Verfahren nach Anspruch 1 gelöst. Erfindungsgemäß wird flüssiges Kohlendioxid einem Tank entnommen, in dem es unter einem Druck unterhalb des geforderten Solldrucks und bei einer Temperatur unterhalb der Solltemperatur gespeichert ist. Das flüssige Kohlendioxid wird dann, bevorzugt in unmittelbarer Nähe des Tanks, einer Druckerhöhungsanlage zugeführt, mittels der der Druck des Kohlendioxids erhöht wird und zwar vorzugsweise auf den gewünschten Solldruck. Durch die erfindungsgemäße Druckerhöhung wird das Kohlendioxid unterkühlt, das heißt die Temperatur des Kohlendioxids liegt unterhalb der dem erhöhten Druck entsprechenden Siedetemperatur. Dadurch verdampft das Kohlendioxid beim Weitertransport zum Verbraucher nicht und verbleibt im flüssigen Zustand. Möglichst nahe am Verbraucher wird dann das Kohlendioxid auf die Solltemperatur erwärmt und dem Verbraucher flüssig zugeführt. Das erfindungsgemäße Verfahren gewährleistet, dass auf dem Weg vom Tank zum Verbraucher kein Kohlendioxid verdampft und am Verbraucher stets flüssiges Kohlendioxid ansteht.

Bevorzugt wird das Kohlendioxid einem Niederdrucktank mit einem Druck zwischen 10 und 30 bar und einer entsprechenden Siedetemperatur von etwa -40°C bis -10°C entnommen. Besonders bevorzugt wird ein Niederdrucktank mit einem Druck zwischen 14 und 25 bar verwendet. Der Druck des Kohlendioxids wird dann bevorzugt auf 40 bis 90 bar, besonders bevorzugt 50 bis 70 bar, erhöht.

Als Druckerhöhungsanlage wird bevorzugt ein pneumatisch oder hydraulisch angetriebener Verdichter verwendet. Dadurch wird es möglich, das Kohlendioxid nach der Druckerhöhung direkt über eine Stichleitung zum Verbraucher zu führen, ohne dass ein Teil des Kohlendioxids wieder zurück in den Tank oder einen anderen Druckbehälter oder Zwischentank geleitet werden müsste. Es ist aber ebenso möglich, einen elektrisch angetriebenen Verdichter oder eine Kreisel- oder Kolbenpumpe einzusetzen, die eine Rückführung zumindest eines Teils des Kohlendioxids in den Tank erforderlich machen.

Nach der Druckerhöhung liegt das Kohlendioxid im stark unterkühlten Zustand vor, das heißt, dessen Temperatur liegt deutlich unterhalb der dem Kohlendioxid-Druck entsprechenden Siedetemperatur. Unter diesen Bedingungen findet keine Verdampfung von flüssigem Kohlendioxid statt.

Vor der Druckerhöhung ist das Kohlendioxid im Gleichgewichtszustand, das heißt, noch nicht unterkühlt. In diesem Zustand kann bei entsprechender Wärmezufuhr Kohlendioxid verdampfen. Aus diesem Grund wird die Druckerhöhungsanlage möglichst nahe am Kohlendioxid-Tank vorgesehen. Bevorzugt beträgt die Leitungslänge zwischen dem Tank und der Druckerhöhungsanlage weniger als 2 Meter, besonders bevorzugt weniger als 1 Meter.

Es hat sich weiter als günstig erwiesen, in der Leitung zwischen dem Kohlendioxid-Tank und dem Verbraucher einen Pufferbehälter vorzusehen, in dem flüssiges Kohlendioxid zwischengespeichert werden kann. Bevorzugt wird ein Pufferbehälter mit einem Fassungsvolumen zwischen 5 und 50 kg Kohlendioxid, besonders bevorzugt zwischen 10 und 30 kg Kohlendioxid, stromabwärts des Erhitzers unmittelbar vor dem Verbraucher vorzusehen. Als Pufferbehälter kommt insbesondere eine Steigrohrflasche in Betracht.

Wenn mehrere Verbraucher aus einem Kohlendioxid-Tank mit flüssigem Kohlendioxid versorgt werden, ist es auch möglich, ein Flaschenbündel mit einem Fassungsvolumen von beispielsweise bis zu 450 kg Kohlendioxid als Pufferbehälter einzusetzen.

Die Anwärmung des Kohlendioxids erfolgt vorzugsweise auf eine Temperatur im Bereich von von 5°C bis 25°C, besonders bevorzugt von 10°C bis 20°C. Die Verwendung dieses etwa umgebungswarmen Temperaturbereichs hat den Vorteil, dass Kondensation von Luftfeuchtigkeit auf dem Verbraucher und den das Kohlendioxid führenden Leitungen weitgehend vermieden wird. Je nach Einsatzbereich kann die Luftfeuchtigkeit nämlich unerwünscht sein. So ist insbesondere bei der Verwendung von Kohlendioxid zum Kühlen von Spritzgusswerkzeugen oder Spritzgussformen Feuchtigkeit zu vermeiden, da diese zu Korrosionen an den Werkzeugen führen kann oder negative Auswirkungen auf die Oberflächen der in den Werkzeugen bzw. Formen hergestellten Spritzgussteile hat.

Die Erwärmung des flüssigen Kohlendioxids ist so auszuführen, dass während der Erwärmung und auf dem Weg vom Erhitzer zum Verbraucher keine Verdampfung stattfindet. Als Erhitzer kommen Luftverdampfer, Wasserverdampfer oder ein elektrisch betriebener Erhitzer in Betracht. Vorzugsweise wird aus Platzgründen, aufgrund der Betriebssicherheit und der Regelgenauigkeit ein elektrisch betriebener Erhitzer eingesetzt. Der Erhitzer wird bevorzugt möglichst nahe am Verbraucher angeordnet.

Der elektrisch betriebene Erhitzer wird so dimensioniert, dass auch im diskontinuierlichen Betrieb kein flüssiges Kohlendioxid verdampfen kann. Hierzu ist es von Vorteil, den Erhitzer mit einem Metallblock, bevorzugt einem Aluminiumblock, zu versehen, in dem das flüssige Kohlendioxid geführt wird. Die Temperatur des Metallblocks wird genau geregelt und so an den Druck des Kohlendioxids angepasst, dass sie stets unterhalb der dem Kohlendioxid-Druck entsprechenden Siedetemperatur bleibt. Auf diese Weise wird auch in der Zeit, in der kein Kohlendioxid fließt, verhindert, dass flüssiges Kohlendioxid verdampft.

Die Erfindung eignet sich insbesondere zur Versorgung von Verbrauchern mit "warmem", im Bereich der Umgebungstemperatur liegenden Kohlendioxid unter erhöhtem Druck. Bevorzugtes Einsatzgebiet ist die Temperierung und Kühlung von Spritzgusswerkzeugen mit flüssigem Kohlendioxid, insbesondere mit Kohlendioxid mit einem Druck von etwa 60 bar und einer Temperatur von etwa 15°C. Daneben ist das erfindungsgemäße Verfahren aber beispielsweise auch zur Versorgung von CO₂-Expansionsdüsen für das Hohlkörperblasen oder die Extrusionsinnenkühlung einsetzbar beziehungsweise allgemein bei Verfahren, bei denen zu Kühlzwecken Kohlendioxid aus hohem Druckbereich von mehr als 50 bar entspannt wird.

Die Erfindung sowie weitere Einzelheiten der Erfindung werden im Folgenden anhand von in den Zeichnungen dargestellten Ausführungsbeispielen näher erläutert. Hierbei zeigen
- Figur 1: eine erfindungsgemäße Vorrichtung zur Versorgung von Extrudern mit flüssigem Kohlendioxid und
- Figur 2: eine alternative Ausführung des in Figur 1 dargestellten Versorgungskonzepts.

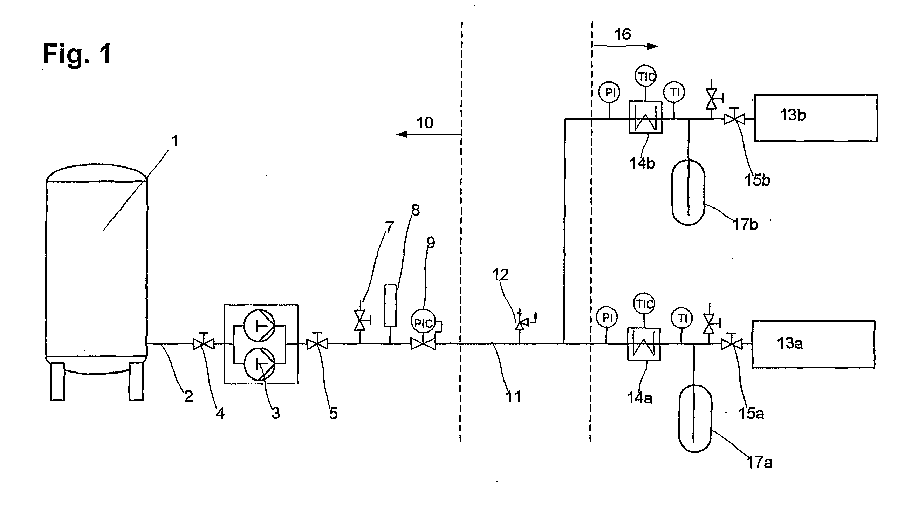

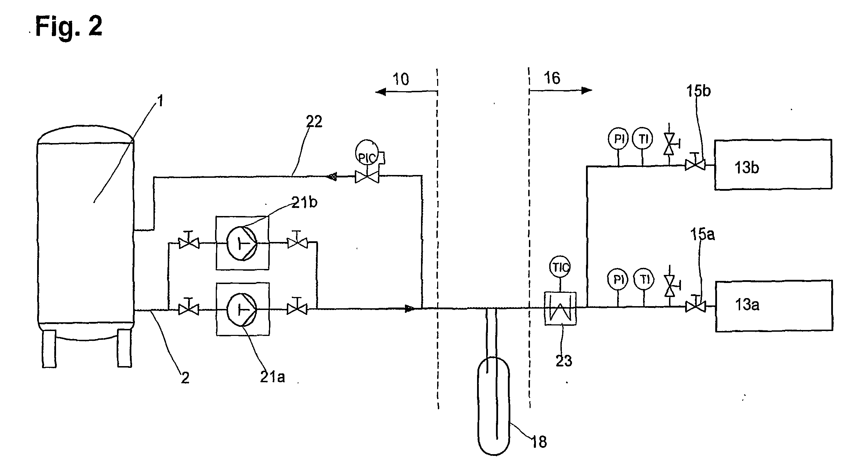

In den Figuren 1 und 2 ist jeweils eine Vorrichtung zur Versorgung von Werkzeugen, insbesondere Spritzgusswerkzeugen bzw. -maschinen, mit flüssigem Kohlendioxid dargestellt. Das flüssige Kohlendioxid wird zur Kühlung der Spritzgusswerkzeuge benötigt.

Figur 1 zeigt eine Vorrichtung, die nach dem erfindungsgemäßen Verfahren arbeitet. In einem Niederdrucktank 1 wird flüssiges Kohlendioxid unter einem Druck von 20 bar und einer entsprechenden Siedetemperatur von etwa -20°C gespeichert. Der Tank 1 ist als vakuumisolierter Tank ausgeführt, kann aber auch schaumisoliert sein. Am unteren Ende des Tanks 1 ist eine Entnahmeleitung 2 angebracht, über die flüssiges Kohlendioxid dem Tank 1 entnommen werden kann.

An die Entnahmeleitung 2 schließt sich eine Verdichterstation 3 an. Vor und hinter der Verdichterstation 3 sind jeweils Ventile 4, 5 geschaltet. Mittels der Verdichterstation 3 wird das aus dem Tank 1 abgezogene Kohlendioxid auf einen erhöhten Druck von 40 bis 90 bar, vorzugsweise 50 bis 70 bar, komprimiert.

Stromabwärts der Ventile 5a, 5b werden die beiden Leitungen a, b wieder zu einer gemeinsamen Leitung zusammengeführt. In der gemeinsamen Leitung sind in Serie ein Entlüftungsventil 7, ein Beruhigungsbehälter 8 sowie ein Druckregler 9 angeordnet.

Die bisher beschriebene Anordnung kann als tankseitige Installation 10 zusammengefasst werden. Insbesondere befindet sich die Verdichterstation 3 in unmittelbarer Nähe des Tanks 1, das heißt die Länge der Entnahmeleitung 2 stromaufwärts der Verdichterstation 3 wird sehr kurz gehalten, vorzugsweise beträgt die Länge der Entnahmeleitung 2 weniger als 1 Meter, um zu verhindern, dass flüssiges Kohlendioxid in der Entnahmeleitung 2 zwischen Tank 1 und der Verdichterstation 3 verdampft.

An die tankseitige Installation 10 schließt sich eine Hochdruckleitung 11 an, die mit einem Sicherheitsventil 12 versehen ist und zu den mit Kohlendioxid zu versorgenden Spritzgussmaschinen 13a, 13b führt. Jeder der Spritzgussmaschinen 13a, 13b sind jeweils ein elektrischer Erhitzer 14a, 14b und ein steuerbares Magnetventil 15a, 15b vorgeschaltet.

Die elektrischen Erhitzer 14a, 14b sind so dimensioniert, dass auch im diskontinuierlichen Betrieb keine Flüssigkeit verdampft. Dies wird dadurch erreicht, dass das flüssige Kohlendioxid in einen Metallblock, vorzugsweise einen Aluminiumblock, geführt wird, dessen Temperatur an den Kohlendioxiddruck nach der Verdichterstation 3 angepasst wird. Die Temperatur des Metallblocks wird genau geregelt, so dass in der Zeit, in der kein Kohlendioxid fließt, kein flüssiges Kohlendioxid verdampft. Außerdem sind die Erhitzer 14a, 14b so nahe an den Spritzgussmaschinen 13a, 13b angeordnet, dass auch nach dem Erwärmen eine Verdampfung des Kohlendioxids vor dem Eintritt in die Spritzgussmaschinen 13a, 13b ausgeschlossen ist. Die Anordnung der Erhitzer 14a, 14b, der Magnetventile 15a, 15b und der zugeordneten Mess- und Regelarmaturen kann daher als verbraucherseitige Installation 16 zusammengefasst werden.

Das dem Tank 1 unter einem Druck von 20 bar und bei einer Temperatur von etwa - 20°C entnommene Kohlendioxid wird in der Verdichterstation 3 auf einen erhöhten Druck von 40 bis 90 bar, beispielsweise 60 bar, gebracht. Die Temperatur des Kohlendioxids wird während des Verdichtens dagegen nur unwesentlich erhöht, so dass das Kohlendioxid in stark unterkühltem Zustand vorliegt, das heißt, die Temperatur liegt deutlich unterhalb der dem erhöhten Druck entsprechenden Siedetemperatur.

In diesem unterkühlten Zustand wird das flüssige Kohlendioxid den zu kühlenden Süpritzgussmaschinen 13a, 13b zugeführt. Aufgrund der starken Unterkühlung ist eine Verdampfung von flüssigem Kohlendioxid während des Transports durch die Hochdruckleitung 11 ausgeschlossen. Der Grad der Unterkühlung kann dabei über die Verdichterstation 3 eingestellt werden, so dass auch bei höheren Umgebungstemperaturen, wie sie beispielsweise im Sommer in Produktionshallen vorkommen können, sichergestellt ist, dass kein Kohlendioxid verdampft.

Das unterkühlte Kohlendioxid wird dann in den Erhitzern 14a, 14b auf die gewünschte Solltemperatur gebracht. Zur Kühlung beziehungsweise Temperierung von Spritzgussmaschinen 13a, 13b hat sich eine Erwärmung des Kohlendioxids auf 15°C als günstig erwiesen.

Die Kühlung der Spritzgussmaschinen 13a, 13b wird über das zeitliche Takten der Magnetventile 15a, 15b gesteuert. Durch die erfindungsgemäße Verfahrensweise steht an den Magnetventilen 15a, 15b immer flüssiges Kohlendioxid mit definierten Bedingungen, beispielsweise 60 bar und 15°C, an. Auf diese Weise wird eine reproduzierbar gleichmäßige Kühlung der Spritzgussmaschinen 13a, 13b auch bei schwankenden Umgebungstemperaturen sichergestellt.

Unmittelbar vor den Spritzgussmaschinen 13a, 13b sind jeweils Steigrohrflaschen 17a, 17b als Pufferbehälter vorgesehen. Die Steigrohrflaschen fassen zwischen 10 und 30 kg Kohlendioxid. Aus den Pufferbehältern 17a, 17b können die Spritzgussmaschinen 13a, 13b sofort mit flüssigem Kohlendioxid versorgt werden. In Zeiten, in denen die Spritzgussmaschinen 13a, 13b kein Kohlendioxid benötigen, kann dieses in den Pufferbehältern 17a, 17b zwischengelagert werden, um bei Bedarf schnellstmöglich flüssiges Kohlendioxid zur Verfügung zu haben.

Figur 2 zeigt eine alternative Ausführungsform der Erfindung, bei der anstelle der Verdichterstation 3 Pumpen 21 a, 21 b verwendet werden. Ansonsten sind in beiden Figuren 1 und 2 identische Bauteile mit identischen Bezugsziffern versehen.

Das flüssige Kohlendioxid wird bei der Anordnung nach Figur 2 vorzugsweise in einem schaumisolierten Speichertank 1 mit Rückkühlaggregat bei einem Druck von 20 bar und einer entsprechenden Siedetemperatur von -20 °C gelagert. Über die Entnahmeleitung 2 wird flüssiges Kohlendioxid aus dem Tank 1 abgezogen und einer von zwei parallel angeordneten Flüssigkeitspumpen 21a, 21 b zugeführt. Als Flüssigkeitspumpen 21 a, 21 b werden Kreisel- oder Kolbenpumpen eingesetzt. Mittels der Flüssigkeitspumpen 21 a, 21 b wird das flüssige Kohlendioxid auf einen Druck von beispielsweise 60 bar verdichtet.

Herkömmliche Flüssigkeitspumpen 21 a, 21 b müssen stets mit Flüssigkeit, hier speziell mit flüssigem Kohlendioxid, versorgt werden. Es ist deshalb erforderlich, das verdichtete Kohlendioxid über eine Ringleitung 22 im Kreislauf in den Tank 1 zurückzuführen. Über die Ringleitung 22 muss ein so großer Kohlendioxid-Strom im Kreis gefahren, dass auch bei maximalem Verbrauch, das heißt, wenn die Magnetventile 15a, 15b die maximale Kohlendioxid-Menge den Spritzgussmaschinen 13a, 13b zudosieren, stets noch flüssiges Kohlendioxid in den Tank 1 zurückgeleitet wird. Das rückgeführte Kohlendioxid wird vor dem Einleiten in den Tank 1 rückgekühlt.

Öffnet eines der beiden Magnetventile 15a, 15b, die den Zufluss von flüssigem Kohlendioxid zu den Spritzgussmaschinen 13a, 13b steuern, so wird verdichtetes flüssiges Kohlendioxid einem Erhitzer 23 zugeführt und auf die Solltemperatur von beispielsweise 15°C oder 20°C erwärmt. Das flüssige Kohlendioxid tritt dann mit der gewünschten Solltemperatur und unter dem gewünschten Solldruck von beispielsweise 60 bar in die Spritzgussmaschine 13a, 13b ein.

In Figur 2 ist anstelle der in Figur 1 gezeigten separaten Pufferbehälter 17a, 17b ein alle Spritzgussmaschinen versorgender gemeinsamer Pufferbehälter 18 vorgesehen. Der Pufferbehälter 18 ist als Bündel von Steigrohrflaschen ausgeführt.

Die in Figur 2 gezeigte Ausführung mit nur einem Erhitzer 23, der beide Spritzgussmaschinen 13a, 13b versorgt, und/oder das Vorsehen eines gemeinsamen Pufferbehälters 18 ist auch bei der Ausführung gemäß Figur 1 einsetzbar. Umgekehrt können selbstverständlich auch bei der Anordnung nach Figur 2 separate Erhitzer und/oder separate Pufferbehälter 17a, 17b für jeden Leitungszweig bzw. für jede Spritzgussmaschine 13a, 13b verwendet werden.

## Patentansprüche

1. Verfahren zur Versorgung eines Verbrauchers (13a, 13b) mit flüssigem Kohlendioxid mit einer Solltemperatur von mehr als 0 °C und einem Solldruck von mehr als 30 bar, wobei das Kohlendioxid einem Tank (1) entnommen wird, in dem das flüssige Kohlendioxid bei einer Temperatur unterhalb der Solltemperatur und einem Druck unterhalb des Solldrucks gespeichert ist und wobei der Druck des Kohlendioxids erhöht wird (3, 21), **dadurch gekennzeichnet, dass** das Kohlendioxid unterkühlt und im unterkühlten Zustand zum Verbraucher transportiert und in der Nähe des Verbrauchers auf die Solltemperatur angewärmt wird (14a, 14b).

2. Verfahren nach Anspruch 1, **dadurch gekennzeichnet, dass** der Druck des Kohlendioxids auf 40 bis 90 bar, bevorzugt 50 bis 70 bar, erhöht wird.

3. Verfahren nach einem der Ansprüche 1 oder 2, **dadurch gekennzeichnet, dass** das Kohlendioxid auf eine Temperatur von 5°C bis 25°C, bevorzugt 10°C bis 20°C, angewärmt wird.

4. Verfahren nach einem der Ansprüche 1 bis 3, **dadurch gekennzeichnet, dass** das Kohlendioxid mittels eines elektrisch betriebenen Erhitzers (14a, 14b) erwärmt wird.

5. Verfahren nach einem der Ansprüche 1 bis 4, **dadurch gekennzeichnet, dass** das Kohlendioxid nach der Druckerhöhung (3) über eine Stichleitung (11) zu dem Verbraucher (13a, 13b) geführt wird.

6. Verfahren nach einem der Ansprüche 1 bis 4, **dadurch gekennzeichnet, dass** nach der Druckerhöhung (21) ein Teil des Kohlendioxids in den Tank (1) zurückgeleitet wird und ein Teil des Kohlendioxids dem Verbraucher (13a, 13b) zugeführt wird.

7. Verfahren nach einem der Ansprüche 1 bis 6, **dadurch gekennzeichnet, dass** eine Spritzgussmaschine (13a, 13b) mit Kohlendioxid versorgt wird.

## Claims

1. Method for supplying a sink (13a, 13b) with liquid carbon dioxide with a required temperature of more than 0°C and with a required pressure of more than 30 bar, where the carbon dioxide is taken from a tank (1) in which the liquid carbon dioxide has been stored at a temperature below the required temperature and at a pressure below the required pressure, and where the pressure of the carbon dioxide is increased (3, 21), **characterized in that** the carbon dioxide is supercooled and transported in the supercooled state to the sink and heated in the vicinity of the sink to the required temperature (14a, 14b).

2. Method according to Claim 1, **characterized in that** the pressure of the carbon dioxide is increased to from 40 to 90 bar, preferably from 50 to 70 bar.

3. Method according to either of Claims 1 and 2, **characterized in that** the carbon dioxide is heated to a temperature of from 5°C to 25°C, preferably from 10°C to 20°C.

4. Method according to any of Claims 1 to 3, **characterized in that** the carbon dioxide is heated by means of an electrically operated heater (14a, 14b).

5. Method according to any of Claims 1 to 4, **characterized in that** the carbon dioxide is passed after the pressure increase (3) by way of a stub line (11) to the sink (13a, 13b).

6. Method according to any of Claims 1 to 4, **characterized in that** after the pressure increase (21) a portion of the carbon dioxide is conducted back into the tank (1) and a portion of the carbon dioxide is supplied to the sink (13a, 13b).

7. Method according to any of Claims 1 to 6, **characterized in that** an injection-molding machine (13a, 13b) is supplied with carbon dioxide.

## Revendications

1. Procédé d'alimentation d'un consommateur (13a, 13b) en dioxyde de carbone liquide à une température de consigne supérieure à 0°C et à une pression de consigne supérieure à 30 bars, le dioxyde de carbone étant prélevé dans une cuve (1) dans laquelle le dioxyde de carbone liquide est conservé à une température inférieure à la température de consigne et à une pression inférieure à la pression de consigne, la pression du dioxyde de carbone étant augmentée (3, 21), **caractérisé en ce que**
le dioxyde de carbone est sous-refroidi et transporté à l'état sous-refroidi vers le consommateur et est chauffé (14a, 14b) à la température de consigne à proximité du consommateur.

2. Procédé selon la revendication 1, **caractérisé en ce que** la pression du dioxyde de carbone est augmentée à 40-90 bars et de préférence à 50-70 bars.

3. Procédé selon l'une des revendications 1 ou 2, **caractérisé en ce que** le dioxyde de carbone est réchauffé à une température de 5°C à 25°C et de préférence de 10°C à 20°C.

4. Procédé selon l'une des revendications 1 à 3, **caractérisé en ce que** le dioxyde de carbone est chauffé à l'aide d'un réchauffeur (14a, 14b) fonctionnant à l'électricité.

5. Procédé selon l'une des revendications 1 à 4, **caractérisé en ce qu'**après l'augmentation de pression (3), le dioxyde de carbone est amené au consommateur (13a, 13b) par un tronçon de conduit (11).

6. Procédé selon l'une des revendications 1 à 4, **caractérisé en ce qu'**après l'augmentation de pression (21), une partie du dioxyde de carbone est renvoyée dans la cuve (1) et une partie du dioxyde de carbone est apportée au consommateur (13a, 13b).

7. Procédé selon l'une des revendications 1 à 6, **caractérisé en ce qu'**une machine (13a, 13b) de moulage par injection est alimentée en dioxyde de carbone.
